# EUROPEAN PATENT APPLICATION

(11) **EP 3 428 446 A1**
(43) Date of publication of application: **16.01.2019**
(21) Application number: 17762671.0
(22) Date of filing: 06.01.2017
(51) Int. Cl.: F03B 13/22

(54) **WAVE POWER GENERATION DEVICE**

(30) Priority: 11.03.2016 JP 2016048010
(71) Applicant: KYB Corporation, Tokyo 105-6111 (JP)
(72) Inventor: SAITOU, Yasushi, Tokyo 105-6111 (JP); NAKAJIMA, Masao, Tokyo 105-6111 (JP); UENO, Hiroyuki, Tokyo 105-6111 (JP); OGURA, Masanori, Tokyo 105-6111 (JP); SUGAWARA, Ryo, Tokyo 105-0012 (JP)
(74) Representative: Müller-Boré & Partner Patentanwälte PartG mbB
(86) International application number: PCT/JP2017/000225
(87) International publication number: WO 2017/154324

(57) **Abstract**

Providing a wave power generator which can successfully generate electric power. The wave power generator includes a water wheel (10), a hydraulic circuit (20) and a generator (11). The water wheel (10) is rotated when subjected to waves. The hydraulic circuit (20) includes a hydraulic pump (22), a leveling circuit (25), a flow rate control valve (28) and a hydraulic motor (29) . The hydraulic pump (22) is driven by rotation of the water wheel (10) to discharge hydraulic fluid (21A) . The leveling circuit (25) includes an accumulator (26) storing the hydraulic fluid (21A) discharged from the hydraulic pump (22) and a flow rate control valve (28) . The hydraulic fluid (21A) discharged from the hydraulic pump (22) and the accumulator (26) flows into the flow rate control valve (28), which then discharges the hydraulic fluid (21A) at a predetermined flow rate. The hydraulic motor (29) is driven by inflow of the hydraulic fluid (21A) discharged from the flow rate control valve (28). The generator (11) is driven by rotation of the hydraulic motor (29) to generate electric power.

## Description

### Technical Field

The present invention relates to a wave power generator.

### Background Art

Patent Document 1 discloses a conventional wave power generator. The wave power generator includes a floating body swayed by waves, a large structure less swayed as compared with the floating body or not swayed by the waves, a nut and a ball screw shaft both serving as a power conversion mechanism converting relative displacement between the floating body and the large structure into rotational motion, and a generator unit which is driven by the ball screw shaft rotated by a rotative force given by the power conversion mechanism thereby to generate electric power.

The generator unit includes a hydraulic pump which is driven by the ball screw shaft rotated about a central axis thereby to discharge a hydraulic fluid, an accumulator temporarily storing the hydraulic fluid discharged from the hydraulic pump, a hydraulic motor into which the hydraulic fluid discharged from the hydraulic pump and the hydraulic fluid temporarily stored in the accumulator flow, and a generator driven by the hydraulic motor to generate electric power.

In this wave power generator, the floating body to which the ball screw shaft nut is coupled is moved in an up-down direction when subjected to waves. Then, the ball screw shaft is rotated about a central axis by the ball screw shaft nut moved in the up-down direction together with the floating body. The hydraulic pump is driven by the rotation of the ball screw shaft about the central axis thereby to discharge the hydraulic fluid. At this time, the pressure of the hydraulic fluid located between the hydraulic pump and the hydraulic motor is temporarily increased. As a result, the hydraulic fluid discharged from the hydraulic pump temporarily flows into the accumulator. In other words, the hydraulic fluid flows into the accumulator whereby the accumulator can temporarily store energy as pressure. The hydraulic motor is driven when the hydraulic fluid discharged from the hydraulic pump and the hydraulic fluid temporarily stored in the accumulator flow thereinto. Thus, since the hydraulic fluid can reliably be supplied from the hydraulic pump to the hydraulic motor, the generator can successfully be driven to generate electric power in this wave power generator.

### Prior Art Document

### Patent Documents

Patent Document 1: Japanese Patent Application Publication No. JP 2013-181433

### Summary of the Invention

### Problem to Be Overcome by the Invention

In the wave power generator of Patent Document 1, however, a dimension by which the floating body is moved in the up-down direction changes with a change in the wave size. In other words, an amount of the hydraulic fluid discharged from the hydraulic pump per unit time (hereinafter, "flow rate") changes with the change in the dimension by which the floating body is moved in the up-down direction. That is, the flow rate of the hydraulic fluid flowing into the hydraulic motor changes in this wave power generator. For this reason, there is a possibility that fluctuation may occur in a rotational speed of the hydraulic motor in this wave power generator. In general, a generation efficiency of a generator changes with a change in a rotating speed per unit time. For example, the generation efficiency is reduced as the rotating speed per unit time is lowered. Accordingly, there is a possibility that electric power generated by the generator may fluctuate with changes in the wave size in this wave power generator.

The present invention was made in view of the above-described circumstances in the conventional art and has an object to provide a wave power generator which can successfully generate electric power.

### Means for Overcoming the Problem

A wave power generator in accordance with the invention includes a water wheel, a fluid pressure circuit and a generator. The water wheel is rotated when subjected to waves. The fluid pressure circuit includes a fluid pressure pump, a leveling circuit, a flow rate control valve and a fluid pressure motor. The fluid pressure pump is driven by rotation of the water wheel to discharge operating fluid. The leveling circuit includes an accumulator and a flow rate control valve . The accumulator stores the operating fluid discharged from the fluid pressure pump. The operating fluid discharged from the fluid pressure pump and the accumulator flows into the flow rate control valve, which discharges the operating fluid at a predetermined flow rate. The fluid pressure motor is driven by inflow of the operating fluid discharged from the flow rate control valve. The generator is driven by rotation of the fluid pressure motor to generate electric power.

The wave power generator in accordance with the invention may further include an unloading relief valve configured to discharge the operating fluid stored in the accumulator toward the flow rate control valve when pressure of the operating fluid discharged from the fluid pressure pump becomes not more than a predetermined pressure.

In the wave power generator in accordance with the invention, the fluid pressure motor may be driven while the operating fluid is being discharged from the accumulator, and the fluid pressure motor may be stopped when the operating fluid flows into the accumulator to be stored therein.

In the wave power generator in accordance with the invention, a plurality of the water wheels and a plurality of the fluid pressure circuits may be provided in parallel so that the operating fluid is supplied and discharged through the respective fluid pressure circuits corresponding to the respective water wheels, and the fluid pressure circuits may include respective downstream sides which are joined together to communicate with the fluid pressure motor.

In the wave power generator in accordance with the invention, a flow path at a downstream side of the fluid pressure pump may be divided into a plurality of leveling circuits provided in parallel, and the leveling circuits may include respective downstream sides which are joined together to communicate with the fluid pressure motor.

In the wave power generator in accordance with the invention, a set pressure of a gas enclosed in the accumulator may be adjustable.

### Brief Description of the Drawings

Fig. 1 is a schematic view of the wave power generator of a first embodiment;
Fig. 2 is a schematic view of the wave power generator of a second embodiment;
Fig. 3 is a schematic view of the wave power generator of a third embodiment;
Figs. 4 (A) and 4 (B) are schematic diagrams of an unloading relief valve (A) in a closed state and (B) in an open state, respectively; and
Figs. 5(A) and 5(B) are graphs showing (A) changes in pressure of operating fluid discharged from a fluid pressure pump and then passed through a check valve and (B) changes in rotational speed of the fluid pressure motor per unit time, respectively.

### Best Mode for Carrying Out the Invention

### <First Embodiment>

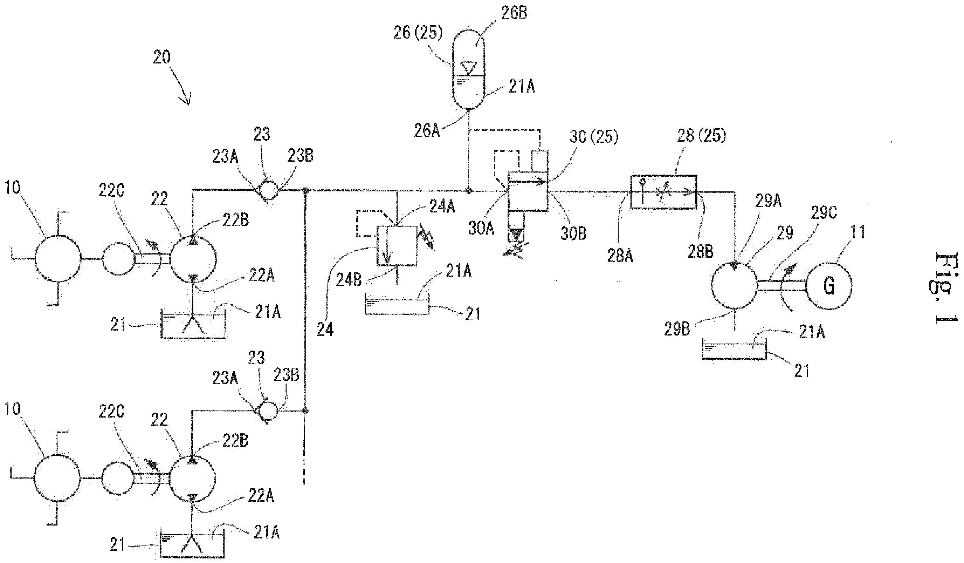

Referring to Fig. 1, a wave power generator of a first embodiment includes a plurality of water wheels 10, a hydraulic circuit 20 serving as a fluid pressure circuit, and an electric generator 11. The water wheels 10 can convert wave energy to kinetic energy. The water wheels 10 are installed in sea, river or a shore of lake. Each water wheel 10 has a rotating shaft and a rotor formed about the rotating shaft (neither of which is shown) . The rotating shaft extends in a vertical direction (not illustrated). The rotor has disc-shaped supports which spread radially about the rotating shaft from upper and lower positions of the rotating shaft and a plurality of vertically long rectangular blades which are provided between the upper and lower supports so as to radially extend in a fashion such that an angle made between the respective blades is uniform in a planar view as viewed from above (not illustrated) . The water wheels 10 are rotated in one direction about the respective rotating shafts with the respective rotors being subjected to waves.

The hydraulic circuit 20 includes a reservoir 21, a plurality of hydraulic pumps 22 serving as fluid pressure pumps, a plurality of check valves 23, a relief valve 24, a leveling circuit 25, and a hydraulic motor 29 serving as a fluid pressure motor. The reservoir 21 reserve hydraulic fluid 21A serving as an operating fluid.

The hydraulic pumps 22 have respective input shafts 22C to which respective upper ends of the rotating shafts of the water wheels 10 are coupled. The hydraulic pumps 22 are each provided with a first inflow port 22A and a first outflow port 22B. The first inflow ports 22A of the hydraulic pumps 22 communicate with the reservoirs 21. When the water wheel 10 is rotated about the rotating shaft with the rotor being subjected to waves, the rotative force is transmitted through the rotating shaft and the input shaft 22C to the hydraulic pump 22 which is thereby driven, with the result that the hydraulic fluid flows from the first inflow port 22A into the hydraulic pump 10. The hydraulic fluid 21A flowing from the first inflow port 22A into the hydraulic pump 22 is discharged from the first outflow port 22B. In other words, the hydraulic pumps 22 are driven by rotation of the water wheels 10 to discharge the hydraulic fluid 21A.

The check valves 23 are each provided with a first inflow port 23A and a second outflow port 23B. The respective second inflow ports 23A of the check valves 23 communicate with the respective first outflow ports 22B of the hydraulic pumps 22. The hydraulic fluid 21A discharged from the first outflow port 22B of the hydraulic pump 22 flows from the second inflow port 23A into the check valve 23 and flows from the second outflow port 23B out of the check valve 23. In the check valve 23, the hydraulic fluid 21A is not allowed to flow from the second outflow port 23B toward the second inflow port 23A. In other words, the check valve 23 prevents the hydraulic fluid 21A from flowing from the second outflow port 23B toward the second inflow port 23A. The second outflow ports 23B of the check valves 23 communicate with each other.

The relief valve 24 is provided with a third inflow port 24A and a third outflow port 24B. The third inflow port 24A of the relief valve 24 communicates with the second outflow ports 23B which communicate with each other, of the check valves 23. The third outflow port 24B of the relief valve 24 communicates with the reservoir 21. When pressure of the hydraulic fluid 21A at the third inflow port 24A side exceeds a predetermined pressure, the relief valve 24 causes the hydraulic fluid 21A to flow from the third inflow port 24A to the third outflow port 24B.

The leveling circuit 25 includes an accumulator 26, an unloading relief valve 30 and a flow rate control valve 28. The accumulator 26 is provided with an inflow/outflow port 26A. The inflow/outflow port 26A communicates with the second outflow ports 23B of the check valves 23 and the third inflow port 24A of the relief valve 24. The hydraulic fluid 21A flows from the inflow/outflow port 26A into the accumulator 26 until the pressure of the hydraulic fluid 21A discharged from the hydraulic pumps 22 and then passing through the check valves 23 is increased to reach a predetermined pressure. In other words, the hydraulic fluid 21A discharged from the hydraulic pumps 22 is stored in the accumulator 26. Furthermore, the accumulator 26 has an internally provided gas enclosure region 26B in which a nitrogen gas can be enclosed. The accumulator 26 can adjust an amount of nitrogen gas enclosed in the gas enclosure region 26B according to the pressure of the hydraulic fluid 21A in the hydraulic circuit 20 with which the accumulator 26 communicates. In other words, a set pressure of the enclosed nitrogen gas is adjustable in the accumulator 26.

The unloading relief valve 30 is provided with a fourth inflow port 30A and a fourth outflow port 30B. The fourth inflow port 30A communicates with the second outflow ports 23B of the check valves 23, the third inflow port 24A of the relief valve 24 and the inflow/outflow port 26A of the accumulator 26. When the pressure of the hydraulic fluid discharged from the hydraulic pumps 22 and then passing through the check valves 23 becomes not less than the predetermined pressure, the unloading relief valve 30 is opened to cause the hydraulic fluid 21A to flow from the fourth inflow port 30A to the fourth outlet port 30B. Furthermore, when the pressure of the hydraulic fluid discharged from the hydraulic pumps 22 and then passing through the check valves 23 becomes not more than a predetermined pressure, the unloading relief valve 30 is closed to stop flow of the hydraulic fluid 21A from the fourth inflow port 30A to the fourth outflow port 30B. The inner structure and operation of the unloading relief valve 30 will be described later.

The flow rate control valve 28 is provided with a fifth inflow port 28A and a fifth outflow port 28B. The fifth inflow port 28A communicates with the fourth outflow port 30B of the unloading relief valve 30. The flow rate control valve 28 into which the hydraulic fluid 21A flows from the fifth inflow port adjusts the flow rate of the hydraulic fluid 21A and discharges the hydraulic fluid 21A from the fifth outflow port 28B. In the flow rate control valve 28, the flow rate of the hydraulic fluid 21A discharged from the fifth outflow port 28B is not changed by a change in the pressure of the hydraulic fluid 21A filling the fifth inflow port 28A. In other words, the flow rate control valve 28 is a pressure-compensated type.

The hydraulic motor 29 is provided with a sixth inflow port 29A and a sixth outflow port 29B. The hydraulic motor 29 is further provided with an output shaft 29C. The sixth inflow port 29A communicates with the fifth outflow port 28B of the flow rate control valve 28. The sixth outflow port 29B of the hydraulic motor 29 communicates with the reservoir 21. The hydraulic motor 29 is driven by the hydraulic fluid 21A flowing thereinto from the sixth inflow port 29A, so that the output shaft 29C is rotated. In other words, the hydraulic motor 29 is driven by inflow of the hydraulic fluid 21A discharged from the flow rate control valve 28. The hydraulic fluid 21A flowing from the sixth inflow port 29A into the hydraulic motor 29 is discharged from the sixth outflow port 29B, returning to the reservoir 21. Thus, the hydraulic circuit 20 through which the hydraulic fluid 21A is circulated is constituted by the reservoir 21, the hydraulic motor 29, the check valves 23, the relief valve 24, the accumulator 26, the unloading relief valve 30, the flow rate control valve 28 and the hydraulic motor 29.

The output shaft 29C of the hydraulic motor 29 is coupled to the generator 11. Rotative force of the output shaft 29C of the hydraulic motor 29 which is driven and rotated by the hydraulic fluid 21A is transmitted to the generator 11, so that the generator 11 is driven to generate electric power. In other words, the generator 11 is driven by rotation of the hydraulic motor 29 to generate electric power.

Next, the operation of the wave power generator will be described with reference to Fig. 1.

First, the water wheels 10 are subjected to waves thereby to be rotated about the respective rotation shafts. The rotative forces of the respective water wheels 10 are transmitted via the rotation shafts and the input shafts 22C to the respective hydraulic pumps 22, which are then driven. Then, the hydraulic fluid 21A reserved in the reservoir 21 is caused to flow from the respective first inflow ports 22A into the hydraulic pumps 22 and then discharged from the respective first outflow ports 22B. The hydraulic fluid 21A discharged from the hydraulic pumps 22 and then passing through the respective check valves 23 flows into the accumulator 26. In this case, the hydraulic fluid 21A continuously flows into the accumulator until the pressure of the hydraulic fluid 21A discharged from the hydraulic pumps 22 and then passing through the check valves 23 is increased to reach the predetermined pressure, thereby being stored in the accumulator 26.

When the rotors of the water wheels 10 receive large waves, rotational speeds of the water wheels 10 are increased, so that the flow rate of the hydraulic fluid 21A discharged from the hydraulic pumps 22 and then passing through the check valves 23 is increased. As a result, the pressure of the hydraulic fluid 21A discharged from the hydraulic pumps 22 and then passing through the check valves 23 tends to be easily increased. In this case, a set pressure of the nitrogen gas enclosed in the accumulator 26 is adjusted to be increased, so that the hydraulic fluid 21A stored in the accumulator 26 is reliably discharged.

Furthermore, when the rotors of the water wheels 10 receive small waves, the rotational speeds of the water wheels 10 are reduced, so that the flow rate of the hydraulic fluid 21A discharged from the hydraulic pumps 22 and then passing through the check valves 23 is reduced. As a result, the pressure of the hydraulic fluid 21A discharged from the hydraulic pumps 22 and then passing through the check valves 23 is not easily increased. In this case, the set pressure of the nitrogen gas enclosed in the accumulator 26 is adjusted to be reduced, so that the hydraulic fluid 21A is caused to reliably flow into the accumulator 26.

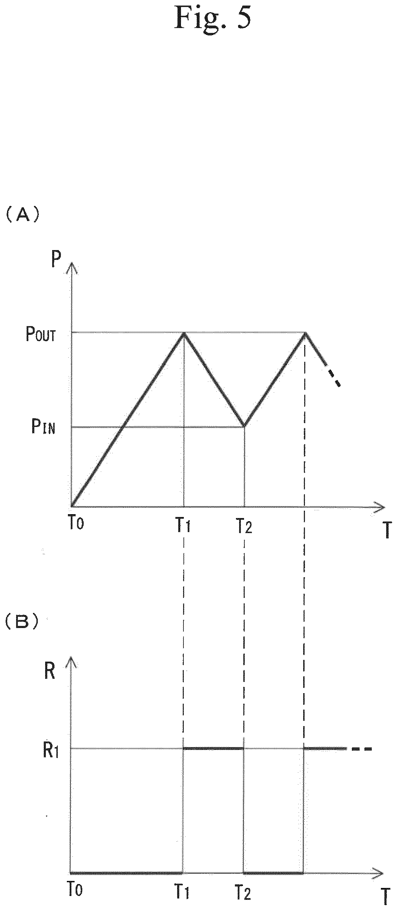

As illustrated in Fig. 5 (A), inflow of the hydraulic fluid 21A into the accumulator 26 starts at time T₀. The pressure of the hydraulic fluid 21A discharged from the hydraulic pumps 22 and then passing through the check valves 23 is increased and reaches a predetermined pressure Pₒᵤₜ at time T₁. The unloading relief valve 30 is then opened. This operation is referred to as "cut-out". The accumulator 26 stores the hydraulic fluid 21A for a time period from time T₀ to time T₁. The predetermined pressure Pₒᵤₜ has a value of 16 MPa. The hydraulic fluid 21A is discharged from the fourth outflow port 30B of the unloading relief valve 30, passes through the flow rate control valve 28, and flows from the sixth inflow port 29A into the hydraulic motor 29. Then, the pressure of the hydraulic fluid 21A discharged from the hydraulic pumps 22 and then passing through the check valves 23 is reduced from the value of Pₒᵤₜ. Then, the hydraulic fluid 21A stored in the accumulator 26 flows toward the flow rate control valve 28. In other words, the unloading relief valve 30 is configured so that the hydraulic fluid 21A stored in the accumulator 26 is discharged toward the flow rate control valve 28 when the pressure of the hydraulic fluid 21A discharged from the hydraulic pumps 22 becomes not more than the predetermined pressure Pₒᵤₜ. The output shaft 29C of the hydraulic motor 29 is rotated by the hydraulic fluid 21A flowing into the hydraulic motor 29. A rotational speed of the output shaft 29C per unit time at this case is designated as reference symbol "R₁" (refer to Fig. 5(B)). In other words, the hydraulic motor 29 is driven while the hydraulic fluid 21A is being discharged from the accumulator 26. The rotative force of the output shaft 29C of the hydraulic motor 29 is transmitted to the generator 11, which is then driven to generate electric power. The hydraulic fluid 21A is discharged from the sixth outflow port 29B of the hydraulic motor 29, returning to the reservoir 21.

Furthermore, when the unloading relief valve 30 is cut out at time T₁, the hydraulic fluid 21A stored in the accumulator 26 flows through the flow rate control valve 28 into the hydraulic motor 29. Then, the pressure of the hydraulic fluid 21A discharged from the hydraulic pumps 22 and then passing through the check valves 23 is reduced and reaches a predetermined pressure P_{IN} at time T₂. The unloading relief valve 30 is then closed. This operation is referred to as "cut-in". The hydraulic fluid 21A is discharged by the accumulator 26 for the time period from the time T₁ to time T₂. The predetermined pressure P_{IN} has the value of 12.8 MPa. The value of P_{IN} is 80% of the value of the predetermined pressure P_{OUT}. When the unloading relief valve 30 is cut in at time T₂, inflow of the hydraulic fluid 21A into the hydraulic motor 29 is stopped, so that rotation of the output shaft 29C of the hydraulic motor 29 rotated at the rotational speed R₁ per unit time is stopped (refer to Fig. 5(B)). Then, the hydraulic fluid 21A discharged from the hydraulic pumps 22 and then passing through the check valves 23 flows into the accumulator 26 again. In other words, when the hydraulic fluid 21A flows into the accumulator 26 to be stored therein, drive of the hydraulic motor 29 is stopped. Thus, in the wave power generator, the pressure of the hydraulic fluid 21A discharged from the hydraulic pumps 22 is repeatedly changed between P_{OUT} and P_{IN}, whereby the hydraulic fluid 21A intermittently flows into the hydraulic motor 29 so that the output shaft 29C is intermittently rotated so that the generator 11 is intermittently driven to generate electric power.

When the rotors of the water wheels 10 receive large waves, the rotational speeds of the water wheels 10 are increased, so that the flow rate of the hydraulic fluid 21A discharged from the hydraulic pumps 22 and then passing through the check valves 23 is increased. As a result, the pressure of the hydraulic fluid 21A discharged from the hydraulic pumps 22 and then passing through the check valves 23 is less likely to be reduced and thereby less likely to reach the predetermined pressure P_{IN}. In this case, once having been cut out, the unloading relief valve 30 becomes less likely to be cut in. In other words, when the rotors of the water wheels 10 receive large waves, the time during which the hydraulic fluid 21A flows into the hydraulic motor 20 becomes longer. As a result, the time during which rotation of the output shaft 29C of the hydraulic motor 29 is stopped becomes shorter, and the rotation time of the output shaft 29C becomes longer. As a result, the generator 11 to which the output shaft 29C is coupled is driven and generates electric power for a longer time. Furthermore, when the rotors of the water wheels 10 receive further larger waves, the output shaft 29C of the hydraulic motor 29 is continuously rotated. As a result, the generator 11 to which the output shaft 29C is coupled is continuously driven to generate electric power.

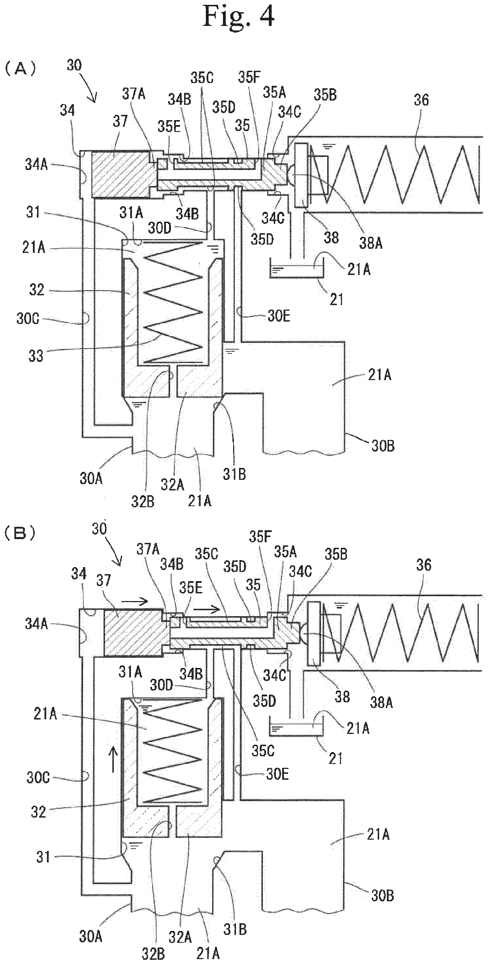

An inner structure of the unloading relief valve 30 will be described with reference to Figs. 4(A) and 4(B). The unloading relief valve 30 has a first cylinder 31, a plunger 32, a first compression coil spring 33, a second cylinder 34, a spool 35, a second compression coil spring 36, a piston 37, a first communication path 30C, a second communication path 30D and a third communication path 30E, in addition to the fourth inflow port 30A and the fourth outflow port 30B.

The first cylinder 31 is cylindrical in shape and extends in the up-down direction. The first cylinder 31 has an upper end closed by a first closing part 31A. The first cylinder 31 has a lower end part formed with an inclined part 31B having an inner diameter that is reduced downward. One of ends of the fourth inflow port 30A communicates with a lower end of the inclined part 31B. One of ends of the fourth outflow port 30B communicates with an upper side surface of the inclined part 31B.

The plunger 32 is cylindrical in shape and extends in the up-down direction. The plunger 32 has a lower end provided with a bottom 32A extending inward into a flat plate shape. The bottom 32A is formed with a through hole 32B extending therethrough in a thickness direction. The plunger 32 has an outer diameter that equals an inner diameter of the first cylinder 31. The plunger 32 has an up-down dimension that is smaller than a dimension of the first cylinder 31 from the first closing part 31A to an upper end of the inclined part 31B. The plunger 32 thus configured is inserted in the first cylinder 31 with the bottom 32A being located at a lower side.

The first compression coil spring 33 extends in the up-down direction. The first compression coil spring 33 has a lower end in abutment against an upper surface of the bottom 32A and an upper end in abutment against an underside of the first closing part 31A of the first cylinder 31. The first compression coil spring 33 applies an elastic force to the plunger 32 in a downward direction. The lower end of the plunger 32 has an outer peripheral edge in abutment against an inside of the inclined part 31B of the first cylinder 31.

The second cylinder 34 is cylindrical in shape and extends in a right-left direction. The second cylinder 34 has a left end closed by a second closing part 34A. The second cylinder 34 includes a left part having a larger inner diameter than a right part thereof. The second cylinder 34 is formed with a plurality of first grooves 34B extending rightward from a boundary between a left part and a right part of the inner periphery thereof. The second cylinder 34 is also formed with a plurality of second grooves 34C extending leftward from a right end of the right part of the inner periphery thereof.

The spool 35 is cylindrical in shape and extends in the right-left direction. The spool 35 has a right end part closed by a third closing part 35A. The spool 35 has a right end formed with a first protrusion 35B protruding rightward. The spool 35 has an outer diameter that equals an inner diameter of the right part of the second cylinder 34. The spool 35 has a first recess 35C formed by recessing an outer diameter thereof from a right-left middle part of the outer periphery thereof to a left end. The spool 35 also has a second recess 35D formed by recessing an outer diameter thereof located on the right of the first recess 35C. The spool 35 is formed with a first communication hole 35E radially extending therethrough on the left of the third closing part 35A. The spool 35 is also formed with a second communication hole 35F radially extending therethrough on the left of the first recess 35C.

The spool 35 thus formed is inserted in the right part of the second cylinder 34 with the third closing part 35A being directed rightward. A pressing member 38 has a left end surface formed with a second protrusion 38A protruding leftward. The second protrusion 38A is in abutment against the first protrusion 35B of the spool 35. The second compression coil spring 36 applies an elastic force to the spool 35 via the pressing member 38 leftward. Furthermore, the first recess 35C of the spool 35 has a left end overlapping and communicating with a right end of the first groove 34B of the second cylinder 34 (refer to Fig. 4(A)). Furthermore, the first communication hole 35E of the spool 35 overlaps and communicates with the first groove 34B of the second cylinder 34 (refer to Fig. 4(A)).

The piston 37 has a columnar shape and extends in the right-left direction. The piston 37 has an outer diameter that equals an inner diameter of the left part of the second cylinder 34. The piston 37 has a right end formed with a third protrusion 37A protruding rightward. The piston 37 has a right-left dimension that is smaller than that of the left part of the second cylinder 34. The piston 37 thus configured is inserted in the left part of the cylinder 34 with the third protrusion 37A being directed rightward. In this case, a right end surface of the third protrusion 37A is in abutment against a left end surface of the spool 35. Furthermore, a left end surface of the piston 37 is spaced from the second closing part 34A of the second cylinder 34.

The first communication path 30C has two ends one of which communicates with the fourth inflow port 30A further communicating with the lower end of the first cylinder 31. The other end of the first communication path 30C communicates with a part of the outer periphery of the left part of the second cylinder 34, which part is located just on the right of the second closing part 34A.

The second communication path 30D has two ends one of which communicates with the first closing part 31A of the first cylinder 31. The other end of the second communication path 30D communicates with a right-left middle part of the outer periphery of the right part of the second cylinder 34. Furthermore, the other end of the second communication path 30D communicates with the first recess 35C of the spool 35.

The third communication path 30E has two ends one of which communicates with the fourth outflow port 30B and is located near the first cylinder 31. The other end of the third communication path 30E communicates with the outer periphery of a right-left middle part of the right part of the second cylinder 34. Furthermore, the other end of the third communication path 30E communicates with the second recess 35D of the spool 35 (refer to Fig. 4(A)).

Next, the operation of the unloading relief valve 30 will be described.

The hydraulic fluid 21A fills all of the first and second cylinders 31 and 34, the fourth inflow port 30A, the fourth outflow port 30B, and the first to third communication paths 30C-30E of the unloading relief valve 30. When the pressure of the hydraulic fluid 21A discharged from the hydraulic pumps 22 and then passing through the check valves 23 is increased but has not reached the predetermined pressure Pₒᵤₜ (refer to Fig. 5(A)), the outer peripheral edge of the lower end of the plunger 32 is in abutment against the inside of the inclined part 31B of the first cylinder 31. In other words, the fourth inflow port 30A and the fourth outflow port 30B are separated from each other by the plunger 32 so that the unloading relief valve 30 is closed. Furthermore, the left end of the first recess 35C of the spool 35 overlaps and communicates with the right end of the first groove 34B of the second cylinder 34 (refer to Fig. 4(A)). Furthermore, the first communication hole 35E of the spool 35 overlaps and communicates with the first groove 34B of the second cylinder 34 (refer to Fig. 4(A)). At this time, the respective pressures of the hydraulic fluid 21A filling the first and second cylinders 31 and 34, the fourth inflow port 30A and the first and second communication paths 30C and 30D are the same. Furthermore, at this time, the fourth outflow port 30B and the third communication path 30E are not in communication with the first and second cylinders 31 and 34, the fourth inflow port 30A and the first and second communication paths 30C and 30D.

Subsequently, the pressure of the hydraulic fluid 21A discharged from the hydraulic pumps 22 and then passing through the check valves 23 is gradually increased. Then, the respective pressures of the hydraulic fluid 21A filling the first and second cylinders 31 and 34, the fourth inflow port 30A and the first and second communication paths 30C and 30D are also increased gradually. At this time, the pressures of the hydraulic fluid 21A filling the fourth outflow port 30B and the third communication path 30E are not increased.

The pressure of the hydraulic fluid 21A discharged from the hydraulic pumps 22 and then passing through the check valves 23 is increased to reach the predetermined pressure Pₒᵤₜ (refer to Fig. 5(A)). Then, the respective pressures of the hydraulic fluid 21A filling the first and second cylinders 31 and 34, the fourth inflow port 30A and the first and second communication paths 30C and 30D are also increased to reach the predetermined pressure Pₒᵤₜ. As a result, the piston 37 is pushed rightward by the hydraulic fluid 21A filling the left part of the piston 37 in the second cylinder 34, so that the piston 37 and the spool 35 are moved rightward in the second cylinder 34. Then, the first recess 35C of the spool 35 is also moved rightward, with the result that the left end of the first recess 35C no longer overlaps with the right end of the first groove 34B of the second cylinder 34 (refer to Fig. 4(B)). Furthermore, the first communication hole 35E of the spool 35 overlaps and communicates with the second groove 34C of the second cylinder (refer to Fig. 4(B)). Furthermore, the other end of the third communication path 30E communicates with the first recess 35C of the spool 35 (refer to Fig. 4(B)). Accordingly, the third communication path 30E communicates with the second communication path 30D via the first recess 35C of the spool 35 (refer to Fig. 4(B)). As a result, the pressures are reduced above the bottom 32A of the plunger 32 of the first cylinder 31, in the second communication path 30D and in the right part of the piston 37 in the second cylinder 34.

The first cylinder 31 is partitioned into an upper part and a lower part by the bottom 32A of the plunger 32 provided with the through hole 32B. In other words, the upper part and the lower part of the first cylinder 31 across the bottom 32A of the plunger 32 communicate with each other via the through hole 32B. Accordingly, the pressure of the hydraulic fluid 21A filling the part below the bottom 32A of the plunger 32 is not reduced suddenly. As a result, the plunger 32 is pushed upward by the hydraulic fluid 21A filling the part below the bottom 32A thereby to be moved upward in the first cylinder 31. Thus, the fourth inflow port 30Aand the fourth outflow port 30B communicate with each other, so that the hydraulic fluid 21A flows from the fourth inflow port 30A to the fourth outflow port 30B. In other words, the unloading relief valve 30 is opened.

When the hydraulic fluid 21A flows from the fourth inflow port 30A to the fourth outflow port 30B, the pressures of the hydraulic fluid 21A filling the part below the bottom 32A of the plunger 32 of the first cylinder 31, the left part of the piston 37 of the second cylinder 37, the fourth inflow port 30A and the first communication path 30C are gradually reduced thereby to reach the predetermined pressure P_{IN} (refer to Fig. 5(A)). As a result, the spool 35 is pushed leftward via the pressing member 38 by the second compression coil spring 36, so that the piston 37 and the spool 35 are moved leftward in the second cylinder 34 (refer to Fig. 4(A)). Since the first recess 35C of the spool 35 is also moved leftward, the left end of the first recess 35C again overlaps and communicates with the right end of the first groove 34B of the second cylinder 34 (refer to Fig. 4(A)). Furthermore, the second communication hole 35F of the spool 35 no longer overlaps with the second groove 34C of the second cylinder 34 (refer to Fig. 4(A)). Furthermore, the other end of the third communication path 30E again communicates with the second recess 35D of the spool 35 (refer to Fig. 4(A)). As a result, the pressures of the hydraulic fluid 21A filling the part above the bottom 32A of the plunger 32 of the first cylinder 31, the second communication path 30D, and the right part of the piston 37 in the second cylinder 34 become the same as the pressures of the hydraulic fluid 21A filling the left part of the piston 37 in the second cylinder 34, the first communication path 30C and the fourth inflow port 30A. The plunger 32 is then moved downward in the first cylinder 31. Thus, the outer peripheral edge of the lower end of the plunger 32 again abuts against the inside of the inclined part 31B of the first cylinder 31, with the result that the fourth inflow port 30A and the fourth outflow port 30B are again separated from each other (refer to Fig. 4(A)). In other words, the unloading relief valve 30 is closed again. Then, the hydraulic fluid 21A discharged from the hydraulic pumps 22 and then passing through the check valves 23 again flows into the accumulator 26.

Thus, the flow rate control valve 28 is provided between the accumulator 26 and the hydraulic motor 29 in this wave power generator. Accordingly, the flow rate of the hydraulic fluid flowing into the hydraulic motor 29 can be adjusted to the predetermined flow rate. As a result, the flow rate of the hydraulic fluid flowing into the hydraulic motor 29 can be suppressed to the predetermined flow rate even when the rotational speeds of the water wheels 10 are changed by the wave size and thereby the flow rate of the hydraulic fluid 21A discharged from the hydraulic pumps 22 is changed. Furthermore, when the flow rate of the hydraulic fluid 21A discharged from the hydraulic pumps 22 is over the flow rate at which the hydraulic fluid 21A can pass through the flow rate control valve 28, the hydraulic fluid 21A that cannot pass through the flow rate control valve 28 can be temporarily stored in the accumulator 26. Furthermore, when the flow rate of the hydraulic fluid 21A discharged from the hydraulic pumps 22 is less than the flow rate at which the hydraulic fluid 21A can pass through the flow rate control valve 28, the hydraulic fluid 21A stored in the accumulator 26 can pass through the flow rate control valve 28 and flow into the hydraulic motor 29. As a result, the rotation of the hydraulic motor 29 can be leveled, so that the generator 11 can stably be driven to generate electric power.

Accordingly, the wave power generator in accordance with the invention can successfully generate electric power.

Furthermore, the wave power generator is provided with the unloading relief valve 30 which discharges the hydraulic fluid 21A stored in the accumulator 26 toward the flow rate control valve 28 when the pressure of the hydraulic fluid 21A discharged from the hydraulic pumps 22 becomes not more than the predetermined pressure. In this wave power generator, when the water wheels 10 are subjected to waves thereby to be rotated, the hydraulic fluid 21A discharged from the hydraulic pumps 22 is stored in the accumulator 26. When the pressure of the hydraulic fluid 21A discharged from the hydraulic pumps 22 becomes not less than the predetermined pressure with progress of storing of the hydraulic fluid 21A into the accumulator 26, the unloading relief valve 30 is opened. When the hydraulic fluid 21A discharged from the hydraulic pumps 22 flows toward the hydraulic motor 29, the pressure of the hydraulic fluid 21A discharged from the hydraulic pumps 22 is reduced. Then, the hydraulic fluid 21A stored in the accumulator 26 flows toward the flow rate control valve 28, with the result that the hydraulic motor 29 can reliably be driven. Thus, even when the water wheels 10 are rotated while being subjected to small waves, an amount of hydraulic fluid 21A by which the hydraulic motor 29 can be rotated can be stored in the accumulator 26, so that the generator 11 can be driven to generate electric power.

Furthermore, the hydraulic motor 29 is driven while the hydraulic fluid 21A is being discharged from the accumulator 26, and the hydraulic motor 29 is stopped when the hydraulic fluid 21A flows into the accumulator 26 to be stored therein. Accordingly, :the hydraulic motor 29 and the generator 11 can reliably be driven with respective efficient rotational speeds per unit time. As a result, the generating efficiency can be further improved even when the water wheels 10 are rotated while being subjected to small waves, with the result that an amount of generated power can be further increased.

Furthermore, a set pressure of gas enclosed in the accumulator 26 is adjustable. Accordingly, the pressure to discharge the hydraulic fluid 21A stored in the accumulator 26 can be adjusted. In other words, the set pressure of nitrogen gas enclosed in the accumulator 26 is adjusted according to the wave size in the location where the wave power generator is installed. As a result, the hydraulic fluid 21A can successfully be caused to flow into and out of the accumulator 26 even when the hydraulic pumps 22 are driven by different waves in the installation location of the wave power generator and thereby discharge the hydraulic fluid 21A with different flow rates.

### <Second Embodiment>

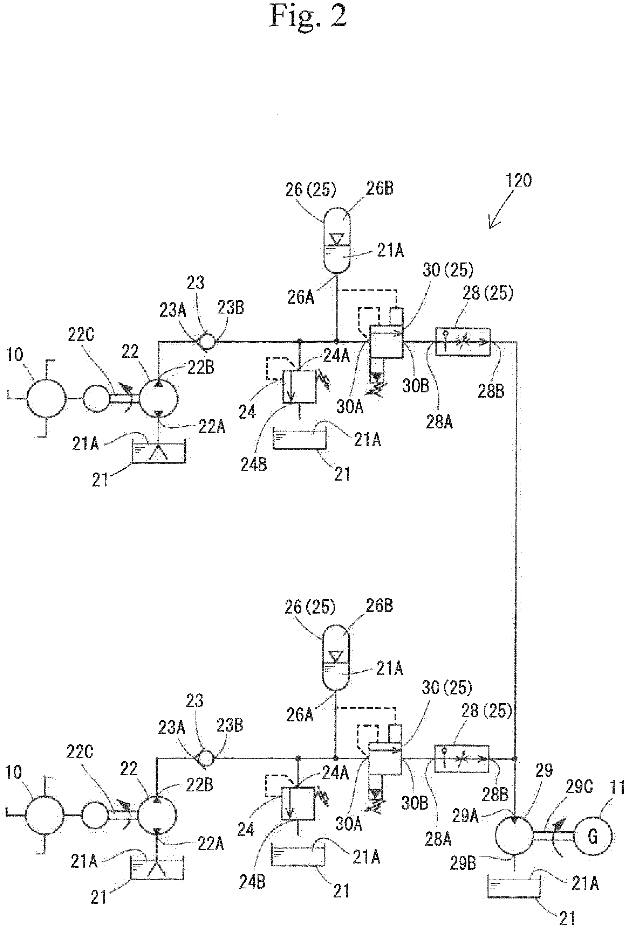

The wave power generator of a second embodiment differs from that of the first embodiment in that the downstream sides of the hydraulic circuit 120 are joined together to communicate with the hydraulic motor 29 as illustrated in Fig. 2. The other construction is the same as that of the first embodiment. Identical or similar parts are labeled by the same reference symbols as those in the first embodiment, and the detailed description of these parts will be eliminated.

The water wheels 10 include respective rotating shafts having respective upper ends coupled to the respective input shafts 22C of the hydraulic pumps 22. The check valves 23 include the respective second inflow ports 23A communicating with the respective first outflow ports 22B of the hydraulic pumps 22.

A plurality of the relief valves 24 includes the respective third inflow ports 24A communicating with the respective second discharge ports 23B of the check valves 23. Furthermore, a plurality of the accumulators 26 has the respective inflow/outflow ports 26A communicating with the respective second discharge ports 23B of the check valves 23 and the respective third inflow ports 24A of the relief valves 24.

A plurality of the unloading relief valves 30 includes the respective fourth inflow ports 30A communicating with the respective second discharge ports 23B of the check valves 23, the respective third inflow ports 24A of the relief valves 24 and the respective inflow/outflow ports 26A of the accumulators 26.

A plurality of the flow rate control valves 28 includes the respective fifth inflow ports 28A communicating with the respective fourth discharge ports 30B of the unloading relief valves 30. Furthermore, the fifth discharge ports 28B of the flow rate control valves 28 communicate with each other. The fifth discharge ports 28B communicating with each other further communicate with the sixth inflow port 29A of the hydraulic motor 29. In other words, in this wave power generator, the water wheels 10 and the hydraulic circuits 120 through which the operating fluid is supplied and discharged corresponding to the respective water wheels 10 are provided in parallel, and the downstream sides of the hydraulic circuits 120 are joined together to communicate with the hydraulic motor 29.

The operation of the wave power generator will now be described with reference to Fig. 2.

First, the water wheels 10 are rotated about respective rotational shafts with the respective rotors being subjected to waves. Rotative forces of the water wheels 10 are transmitted to the respective hydraulic pumps 22 of the respective hydraulic circuits 120, so that the hydraulic pumps 22 are driven. The hydraulic fluid 21A reserved in the reservoir 21 flows from the respective first inflow ports 22A into the hydraulic pumps 22. The hydraulic fluid 21A discharged from the respective hydraulic pumps 22 and then passing through the respective check valves 23 flows into the respective accumulators 26.

When the pressures of the hydraulic fluid 21A discharged from the respective hydraulic pumps 22 and then passing through the respective check valves 23 are increased to reach the predetermined pressure, the respective unloading relief valves 30 are opened. The hydraulic fluid 21A discharged from the respective fourth discharge ports 30B of the unloading relief valves 30 passes through the respective flow rate control valves 28 to be joined together, and flows from the sixth inflow port 29A into the hydraulic motor 29. The output shaft 29C of the hydraulic motor 29 is rotated by the hydraulic fluid 21A flowing into the hydraulic motor 29. The rotative force of the output shaft 29C of the hydraulic motor 29 is transmitted to the generator 11, which is then driven to generate electric power.

In this way, the flow rate control valves 28 are provided between the accumulators 26 and the hydraulic motor 29 also in the wave power generator of the second embodiment. Accordingly, the flow rate of the hydraulic fluid 21A flowing into the hydraulic motor 29 can be adjusted to the predetermined flow rate. As a result, the flow rate of the hydraulic fluid 21A flowing into the hydraulic motor 29 can be suppressed to the predetermined flow rate even when the rotational speeds of the water wheels 10 are changed by the wave size and thereby the flow rates of the hydraulic fluid 21A discharged from the hydraulic pumps 22 are changed. Furthermore, when the flow rate of the hydraulic fluid 21A discharged from the hydraulic pump 22 is over the flow rate at which the hydraulic fluid 21A can pass through the flow rate control valve 28, the hydraulic fluid 21A that cannot pass through the flow rate control valve 28 can be temporarily stored in the accumulator 26. Furthermore, when the flow rate of the hydraulic fluid 21A discharged from the hydraulic pump 22 is less than the flow rate at which the hydraulic fluid 21A can pass through the flow rate control valve 28, the hydraulic fluid 21A stored in the accumulator 26 can pass through the flow rate control valve 28 and flow into the hydraulic motor 29. As a result, the rotation of the hydraulic motor 29 can be leveled, so that the generator 11 can stably be driven to generate electric power.

Accordingly, the wave power generator in accordance with the invention can successfully generate electric power.

Furthermore, the wave power generator is provided with the unloading relief valves 30 each of which discharges the hydraulic fluid 21A stored in the accumulator 26 toward the flow rate control valve 28 when the pressure of the hydraulic fluid 21A discharged from the hydraulic pump 22 becomes not more than the predetermined pressure. In this wave power generator, when the water wheels 10 are subjected to waves thereby to be rotated, the hydraulic fluid 21A discharged from the respective hydraulic pumps 22 is stored in the respective accumulators 26. When the pressure of the hydraulic fluid 21A discharged from the hydraulic pump 22 becomes not less than the predetermined pressure with progress of storing of the hydraulic fluid 21A into the accumulator 26, the unloading relief valve 30 is opened. When the hydraulic fluid 21A discharged from the hydraulic pump 22 flows toward the hydraulic motor 29, the pressure of the hydraulic fluid 21A discharged from the hydraulic pump 22 is reduced. Then, the hydraulic fluid 21A stored in the accumulator 26 flows toward the flow rate control valve 28, with the result that the hydraulic motor 29 can reliably be driven. Thus, even when the water wheels 10 are rotated while being subjected to small waves, an amount of hydraulic fluid 21A by which the hydraulic motor 29 can be rotated can be stored in the accumulators 26, so that the generator 11 can be driven to generate electric power.

Furthermore, the hydraulic motor 29 is driven while the hydraulic fluid 21A is being discharged from the accumulators 26, and the hydraulic motor 29 is stopped when the hydraulic fluid 21A flows into the accumulators 26 to be stored therein. Accordingly, the hydraulic motor 29 and the generator 11 can reliably be driven with respective efficient rotational speeds per unit time. As a result, the generating efficiency can be further improved even when the water wheels 10 are rotated while being subjected to small waves, with the result that an amount of generated power can be further increased.

Furthermore, in this wave power generator, the water wheels 10 and the hydraulic circuits 120 are provided in parallel so that the hydraulic fluid 21A is supplied and discharged through the respective hydraulic circuits corresponding to the respective water wheels 10, and the downstream sides of the hydraulic circuits 120 are joined together to communicate with the hydraulic motor 29. As a result, the water wheels 10 can receive a wider range of wave to be rotated. In other words, the water wheels 10 can receive various sizes of waves as compared with a case where a single water wheel is provided, with the result that the drive of the generator 11 can be leveled. As a result, this wave power generator can suppress fluctuation in the electric power generated by the generator 11.

Furthermore, a set pressure of gas enclosed in the respective accumulators 26 is adjustable. Accordingly, the pressure to discharge the hydraulic fluid 21A stored in the respective accumulators 26 can be adjusted. In other words, the set pressure of nitrogen gas enclosed in the respective accumulators 26 is adjusted according to the wave size in the location where the wave power generator is installed. As a result, the hydraulic fluid 21A can successfully be caused to flow into and out of the respective accumulators 26 even when the hydraulic pumps 22 are driven by different waves in the installation location of the wave power generator and thereby discharge the hydraulic fluid 21A with different flow rates.

### <Third Embodiment>

The wave power generator of a third embodiment differs from those of the first and second embodiments in that leveling circuits 25 are provided in parallel each of which includes the accumulator 26, the unloading relief valve 30 and the flow rate control valve 28, and that the inflow/outflow ports 26A of the accumulators 26 communicate with each other. The other construction is the same as that of the first and second embodiments. Identical or similar parts are labeled by the same reference symbols as those in the first and second embodiments, and the detailed description of these parts will be eliminated.

In the plurality of the leveling circuits 25, the respective fifth inflow ports 28A of the flow rate control valves 28 communicate with the respective inflow/outflow ports 26A of the accumulators 26. Furthermore, the respective fifth inflow ports 28A of the flow rate control valves 28 communicate with the respective fourth discharge ports 30B of the unloading relief valves 30. The respective leveling circuits 25 are thus configured. Furthermore, the respective inflow/outflow ports 26A of the accumulators 26 communicate with each other. The inflow/outflow ports 26A of the accumulators 26 communicate with the second discharge port 23B of the check valve 23 and the third inflow port 24A of the relief valve 24.

The fifth discharge ports 28B of the flow rate control valves 28 communicate with each other. The fifth discharge ports 28B communicating with each other further communicate with the sixth inflow port 29A of the hydraulic motor 29. In other words, in the hydraulic circuit 220 of this wave power generator, a flow path at the downstream side of the hydraulic pump 22 is divided into a plurality of leveling circuits 25 provided in parallel, and downstream sides of the leveling circuits 25 are joined together to communicate with the hydraulic motor 29.

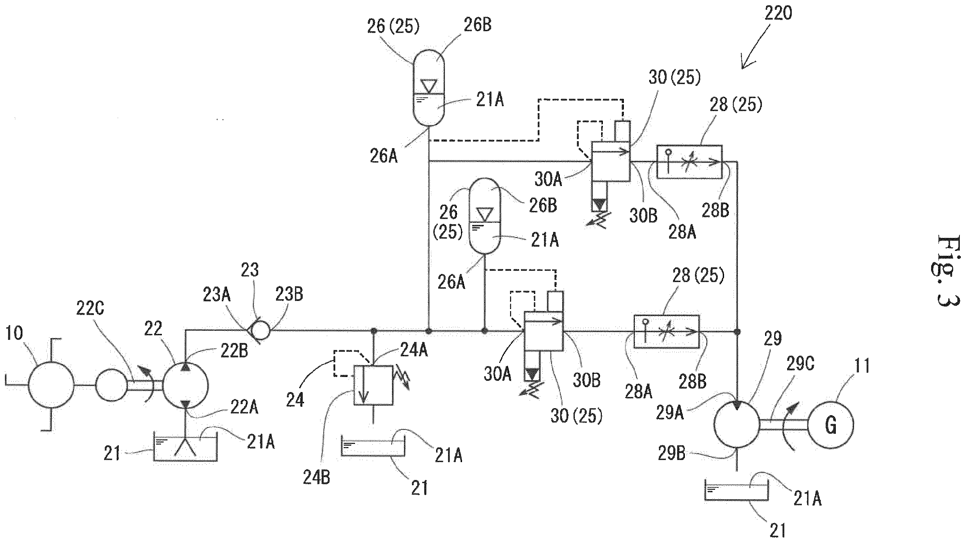

The operation of the wave power generator will be described with reference to Fig. 3.

First, the water wheel 10 is rotated about the rotational shaft with the rotor being subjected to waves. Rotative force of the water wheel 10 is transmitted to the hydraulic pump 22, so that the hydraulic pump 22 is driven. The hydraulic fluid 21A reserved in the reservoir 21 flows from the first inflow port 22A into the hydraulic pump 22. The hydraulic fluid 21A discharged from the hydraulic pump 22 and then passing through the check valve 23 flows into the respective accumulators 26 of the respective leveling circuits 25.

When the pressure of the hydraulic fluid 21A discharged from the hydraulic pump 22 and then passing through the check valve 23 is increased to reach the predetermined pressure, the unloading relief valves 30 are opened. The hydraulic fluid 21A discharged from the fourth discharge ports 30B of the unloading relief valves 30 passes through the flow rate control valves 28 and flows from the sixth inflow port 29A into the hydraulic motor 29. The output shaft 29C of the hydraulic motor 29 is rotated by the hydraulic fluid 21A flowing into the hydraulic motor 29. The rotative force of the output shaft 29C of the hydraulic motor 29 is transmitted to the generator 11, which is then driven to generate electric power.

In this way, the flow rate control valves 28 are provided between the accumulators 26 and the hydraulic motor 29 also in the wave power generator of the third embodiment. Accordingly, the flow rate of the hydraulic fluid 21A flowing into the hydraulic motor 29 can be adjusted to the predetermined flow rate. As a result, the flow rate of the hydraulic fluid 21A flowing into the hydraulic motor 29 can be suppressed to the predetermined flow rate even when the rotational speed of the water wheel 10 is changed by the wave size and thereby the flow rate of the hydraulic fluid 21A discharged from the hydraulic pump 22 is changed. Furthermore, when the flow rate of the hydraulic fluid 21A discharged from the hydraulic pump 22 is over the flow rate at which the hydraulic fluid 21A can pass through the respective flow rate control valves 28, the hydraulic fluid 21A that cannot pass through the respective flow rate control valves 28 can be temporarily stored in the respective accumulators 26. Furthermore, when the flow rate of the hydraulic fluid 21A discharged from the hydraulic pump 22 is less than the flow rate at which the hydraulic fluid 21A can pass through the respective flow rate control valves 28, the hydraulic fluid 21A stored in the respective accumulators 26 can pass through the respective flow rate control valves 28 and flow into the hydraulic motor 29. As a result, the rotation of the hydraulic motor 29 can be leveled, so that the generator 11 can stably be driven to generate electric power.

Accordingly, the wave power generator in accordance with the invention can successfully generate electric power.

Furthermore, the wave power generator is provided with the unloading relief valves 30 each of which discharges the hydraulic fluid 21A stored in the accumulator 26 toward the flow rate control valve 28 when the pressure of the hydraulic fluid 21A discharged from the hydraulic pump 22 becomes not more than the predetermined pressure. In this wave power generator, when the water wheel 10 is subjected to waves thereby to be rotated, the hydraulic fluid 21A discharged from the hydraulic pump 22 is stored in the respective accumulators 26. When the pressure of the hydraulic fluid 21A discharged from the hydraulic pump 22 becomes not less than the predetermined pressure with progress of storing of the hydraulic fluid 21A into the accumulators 26, the unloading relief valves 30 are opened. When the hydraulic fluid 21A discharged from the hydraulic pump 22 flows toward the hydraulic motor 29, the pressure of the hydraulic fluid 21A discharged from the hydraulic pump 22 is reduced. Then, the hydraulic fluid 21A stored in the accumulators 26 flows toward the respective flow rate control valves 28, with the result that the hydraulic motor 29 can reliably be driven. Thus, even when the water wheel 10 is rotated while being subjected to small waves, an amount of hydraulic fluid 21A by which the hydraulic motor 29 can be rotated can be stored in the accumulators 26, so that the generator 11 can be driven to generate electric power.

Furthermore, the hydraulic motor 29 is driven while the hydraulic fluid 21A is being discharged from the accumulators 26, and the hydraulic motor 29 is stopped when the hydraulic fluid 21A flows into the accumulators 26 to be stored therein. Accordingly, the hydraulic motor 29 and the generator 11 can reliably be driven with respective efficient rotational speeds per unit time. As a result, the generating efficiency can be further improved even when the water wheel 10 is rotated while being subjected to small waves, with the result that an amount of generated power can be further increased.

Furthermore, in this wave power generator, the flow path at the downstream side of the hydraulic pump 22 is divided into a plurality of the leveling circuits 25 provided in parallel, and the downstream sides of the leveling circuits 25 are joined together thereby to communicate with the hydraulic motor 29. As a result, since the hydraulic fluid 21A discharged from the hydraulic pump 22 flows into the respective leveling circuits 25, the accumulators 26 and the flow rate control valves 28 both of which are provided in the respective leveling circuits 25 can be rendered smaller in size. Furthermore, an amount of hydraulic fluid 21A that is discharged from the hydraulic pump 22 and allowed to flow into the respective accumulators 26 can easily be changed by changing the number of the leveling circuits 25.

Furthermore, a set pressure of the gas enclosed in the respective accumulators 26 is adjustable. Accordingly, the pressure to discharge the hydraulic fluid 21A stored in the respective accumulators 26 can be adjusted. In other words, the set pressure of nitrogen gas enclosed in the respective accumulators 26 is adjusted according to the wave size in the installation location of the wave power generator. As a result, the hydraulic fluid 21A can successfully be caused to flow into and out of the respective accumulators 26 even when the hydraulic pump 22 is driven by different waves in the installation location of the wave power generator and thereby discharges the hydraulic fluid 21A with different flow rates.

### <Other Embodiments>

The present invention should not be limited to the embodiments described above with reference to the drawings, but the technical scope of the invention encompasses the following embodiments, for example.
(1) Although the hydraulic fluid is used in each of the first to third embodiments, another type of liquid or gas may be used.
(2) Although the cut-out pressure is set at 16 MPa in the first embodiment, it may be less than or above 16 MPa.
(3) Although the cut-in pressure is set at 12.8 MPa in the first embodiment, it may be less than or above 12.8 MPa.
(4) Although a plurality of the water wheels, a plurality of the plural hydraulic motors and a plurality of the plural check valves are used in the first embodiment, a single water wheel, a single hydraulic motor and a single check valve may be used.
(5) Although a single water wheel, a single hydraulic motor and a single check valve are used in the third embodiment, a plurality of water wheels, a plurality of hydraulic motors and a plurality of check valves may be used.
(6) Although the set pressure of the nitrogen gas enclosed in the accumulator is adjusted in the first embodiment, another method such as a spring may be used.
(7) Although the leveling circuits are provided in parallel in the third embodiment, a single leveling circuit may be provided.
(8) Although the unloading relief valve is used in each of the first to third embodiments, it may not be used. When no unloading relief valve is used, an electromagnetic valve or the like is used instead of the unloading relief valve. The pressure of the hydraulic fluid passing through the check valve is monitored by a pressure gauge. With this, the electromagnetic valve can be opened when the pressure of the hydraulic fluid passing through the check valve is increased to a predetermined pressure. Furthermore, the electromagnetic valve is closed when the pressure of the hydraulic fluid passing through the check valve is reduced to the predetermined pressure.
(9) Although the nitrogen gas is enclosed in the gas enclosure region of the accumulator in the first embodiment, a gas such as carbon dioxide or atmosphere may be enclosed.
(10) Although two hydraulic circuits to which the respective water wheels are connected are provided in the second embodiment, three or more hydraulic circuits to which respective water wheels are connected may be provided.

### Explanation of Reference Symbols

10 ... water wheel; 11 ... generator; 20, 120, 220 ... hydraulic circuit (fluid pressure circuit); 21A ... hydraulic fluid (operating fluid) ; 22 ... hydraulic pump (fluid pressure pump), 25 ... leveling circuit; 26 ... accumulator; 28 ... flow rate control valve; 29 ... hydraulic motor (fluid pressure motor).

## Claims

1. A wave power generator comprising:
a water wheel rotated when subjected to waves;
a fluid pressure pump driven by rotation of the water wheel to discharge an operating fluid;
a fluid pressure circuit including a leveling circuit including an accumulator storing the operating fluid discharged from the fluid pressure pump and a flow rate control valve into which the operating fluid discharged from the fluid pressure pump and the accumulator flows and which discharge the operating fluid at a predetermined flow rate, the fluid pressure circuit further including a fluid pressure motor driven by inflow of the operating fluid discharged from the flow rate control valve; and
a generator driven by rotation of the fluid pressure motor to generate electric power.

2. The wave power generator according to claim 2, further comprising an unloading relief valve configured to discharge the operating fluid stored in the accumulator toward the flow rate control valve when pressure of the operating fluid discharged from the hydraulic pump becomes not more than a predetermined pressure.

3. The wave power generator according to claim 1, wherein the hydraulic motor is driven while the operating fluid is being discharged from the accumulator, and the hydraulic motor is stopped when the operating fluid flows into the accumulator to be stored therein.

4. The wave power generator according to any one of claims 1 to 3, wherein a plurality of the water wheels and a plurality of the hydraulic circuits are provided in parallel so that the operating fluid is supplied and discharged through the respective hydraulic circuits corresponding to the respective water wheels, and the hydraulic circuits include respective downstream sides which are joined together to communicate with the hydraulic motor.

5. The wave power generator according to claim 1 or 2, wherein a flow path at a downstream side of the hydraulic pump is divided into a plurality of leveling circuits, and the hydraulic circuits include respective downstream sides which are joined together to communicate with the hydraulic motor.

6. The wave power generator according to claim 1, wherein a set pressure of a gas enclosed in the accumulator is adjustable.

7. The wave power generator according to claim 4, wherein a set pressure of a gas enclosed in the accumulator is adjustable.

8. The wave power generator according to claim 5, wherein a set pressure of a gas enclosed in the accumulator is adjustable.
